# EUROPÄISCHE PATENTANMELDUNG

(11) **EP 2 154 488 A2**
(43) Veröffentlichungstag der Anmeldung: **17.02.2010**
(21) Anmeldenummer: 09009357.6
(22) Anmeldetag: 18.07.2009
(51) Int. Cl.: G01D 11/24

(54) **Landeklappensensoreinheit**

(30) Priorität: 13.08.2008 DE 102008038956
(71) Anmelder: Diehl Aerospace GmbH, 88662 Überlingen (DE)
(72) Erfinder: Petersen, Benno, 88634 Herdwangen (DE); Kummle, Wolfgang, 88682 Salem/Beuren (DE)
(74) Vertreter: Diehl Patentabteilung

(57) **Zusammenfassung**

Die Erfindung geht aus von einem Landeklappensensoreinheit (2) mit einem Positionssensor (18) zum Erfassen einer Drehstellung einer Welle zum Betätigen von Landeklappen und mit einem den Positionssensor (18) umgebenden Gehäuse (4), mit einem Befestigungsmittel (20, 22) zur Befestigung in einem Flugzeugflügel und einer Anschlussstelle (24) für einen elektrischen Konnektor des Positionssensors (18).

Es wird vorgeschlagen, dass das Gehäuse (4) zumindest teilweise aus Titan in einem Feingussverfahren gefertigt ist. Durch das Titanfeingussverfahren kann ein besonders stabiles und leichtes Gehäuse erreicht werden

## Beschreibung

Die Erfindung betrifft eine Landeklappensensoreinheit mit einem Positionssensor zum Erfassen einer Drehstellung einer Welle zum Betätigen von Landeklappen und mit einem den Positionssensor umgebenden Gehäuse, mit einem Befestigungsmittel zur Befestigung in einem Flugzeugflügel und einer Anschlussstelle für einen elektrischen Konnektor des Positionssensors.

Größere Flugzeuge, wie Passagierflugzeuge oder Transportflugzeuge, umfassen an ihren Tragflächen Landeklappen und bewegliche Vorflügel, die zur Veränderung des Flügelprofils hydraulisch bewegt werden können. Bei einem Landeanflug wird das Flügelprofil gekrümmter eingestellt, sodass der Auftrieb erhöht wird und das Flugzeug trotz langsamer Landegeschwindigkeit genug Auftrieb erfährt. Zur Steuerung der Bewegung der Landeklappen ist im Cockpit des Flugzeugs ein Wahlhebel vorhanden, über den der Pilot die Position der Landeklappen und Vorflügel einstellt. Der Eingabebefehl wird als Soll-Stellung von einem Rechner verarbeitet, der die Soll-Stellung mit der Ist-Stellung der Landeklappen vergleicht und bei Abweichung voneinander ein Steuersignal an einen Antrieb leitet. Der Antrieb bewegt Kugelrollspindeln, die sich durch die Flugzeugflügel erstrecken und mit mehreren hundert Umdrehungen die Landklappen und Vorflügel über entsprechende Zwischenmechaniken ganz ein- oder ausfahren.

Zur zuverlässigen Steuerung der Landeklappen und Vorflügel wird deren aktuelle Stellung mit einem oder mehreren Landeklappensensoren abgetastet, die die Drehstellung der Kugelrollspindel oder einer starr daran angeschlossenen Welle messen. Um eine zuverlässige Messung mit eindeutigen Stellungen zu erreichen wird hierbei die Umdrehungsbewegung mit einem Getriebe untersetzt auf einen Positionsgeber übertragen, der zwischen einem ganz eingefahrenen Zustand und einem voll ausgefahrenen Zustand einer oder mehrerer Landeklappen bzw. Vorflügel weniger als eine ganze Umdrehung bewegt wird, so dass seine Stellung eindeutig einer Klappenstellung zugeordnet werden kann.

Insbesondere bei einem sehr großen Flugzeug kann es erforderlich sein, dass die Landeklappen und beweglichen Vorflügel für einen Landeanflug ausgefahren sein müssen, um ein zuverlässiges Abbremsen des Flugzeugs zu ermöglichen. Liegt ein Defekt in der Bewegungsmechanik vor, sodass Landeklappen oder Vorflügel nicht oder nicht ausreichend in die vorgesehene Stellung bewegt werden können, kann ein Landen problematisch sein. Es ist daher notwendig, dass der Landeklappensensor über einen langen Zeitraum zuverlässig die Ist-Stellung detektiert, um immer eine Steuerung zu ermöglichen und einen mechanischen Defekt früh zu erkennen.

Der Landeklappensensor ist im Innern eines Flugzeugsflügels und geschützt vor äußeren mechanischen Einflüssen angeordnet und umfasst ein Gehäuse, das ihn vor Wettereinflüssen, Wasser und Salz schützt, und der Schnittstellen, z.B. Stecker, für elektrische und signaltechnische Verbindungen trägt.

Es ist eine Aufgabe der Erfindung, einen Landeklappensensor anzugeben, der über einen langen Zeitraum zuverlässig arbeitet.

Diese Aufgabe wird durch einen Landeklappensensor der eingangs genannten Art gelöst, bei dem das Gehäuse erfindungsgemäß zumindest teilweise aus Titan in einem Feingussverfahren gefertigt ist. Es kann ein Gehäuse gefertigt werden, das mit nach außen sichtbaren dünnen Strukturen besonders stabil ist.

Die Erfindung geht hierbei von der Überlegung aus, dass der Landeklappensensor trotz seiner geschützten Lage erstaunlicherweise hohen mechanischen Belastungen ausgesetzt zu sein scheint, wie Defekte nahe legen. Es könnte sein, dass die Belastungen während einer Wartung der einzelnen Komponenten der Flügel eines Flugzeugs entstehen und dass das Wartungspersonal sehr grob mit den Landeklappensensoren umgeht und sie zur Demontage z.B. mit einem Gummihammer aus ihrem Sitz löst. Dieses Verhalten wird durch das übliche Gehäuse an sich gefördert, das - um besonders stabil gegen Fehlbehandlung zu sein - mit einer dicken Gehäusewandung gebildet ist, zur Gewichtseinsparung aus Aluminium. Die Dicke des Gehäuses wird vom Wartungspersonal wahrgenommen, das Gehäuse wird für stabil gehalten und entsprechend grob behandelt. Ein grobes Behandeln führt hin und wieder zu von außen nicht sichtbaren Schäden der Elektronik und damit zu einer Reduzierung der Zuverlässigkeit des Landeklappensensors.

Die Erfindung geht daher von der weiteren Überlegung aus, dass ein Gehäuse mit dünnen Strukturen ein vorsichtigeres Verhalten des Wartungspersonals induziert, das eine gewisse Fragilität des Gehäuses vermutet und Wartungsarbeiten vorsichtiger vornimmt. Die geringe Dicke der Gehäusestrukturen darf jedoch nicht auf Kosten der Stabilität des Gehäuses eingeführt werden, die z.B. mit 750 N/cm² festgelegt ist. Auch darf das Gehäuse nicht schwerer als ein bisheriges Gehäuse sein, da Gewichtskriterien im Flugzeugbau sehr hohe Priorität eingeräumt wird.

Mit besonderen Formen des Gehäuses oder üblichen Materialien, die den Preis des Landeklappensensors in einem vermarktbaren Rahmen halten, konnten die hohen Stabilitätsanforderungen nicht eingehalten werden. Auch Titan an sich erschien nicht vorteilhaft, da es - abgesehen von den hohen Materialkosten - entweder nicht stabil genug zu sein schien oder bei entsprechend dicker Ausführung zu schwer ist. Durch die Anwendung des Feingussverfahrens können allerdings zwei Vorteile erzielt werden, die im Zusammenwirken eine Verwendung von Titan ermöglichen. Diese Vorteile entstehen dadurch, dass im Feingussverfahren sehr dünne Wandstärken zwischen 0,5 mm und 0,8 mm mit einer sehr hohen Maßgenauigkeit erreicht werden können.

Die hohe Maßgenauigkeit bietet den ersten Vorteil, dass eine Nachbearbeitung des Gehäuses trotz hoher Genauigkeitsanforderungen weitgehend reduziert werden kann, so dass die Gussstruktur des Metalls nicht oder kaum durch spanende Verfahren beeinträchtigt wird. Die intakte Gusstruktur an entscheidenden Stellen führt zu einer solchen hohen Stabilität, dass die Stabilitäts- und auch die Gewichtskriterien in Verbindung mit einer filigranen Gehäusestruktur eingehalten werden können. Durch die intakte Gussstruktur bleiben äußere, beim Guss entstandene Gefügestrukturen ununterbrochen, so dass das Gehäuse eine hohe Kerbschlagfestigkeit aufweist. Ein Kraftfluss durch äußere Schichten des Gehäuses kann getragen werden, ohne dass an einer Unterbrechung von Gefügestrukturen durch eine vorhergehende spanende Bearbeitung Schwachstellen entstehen, die zu einer Rissbildung führen können.

Der zweite Vorteil liegt darin, dass durch den geringen Aufwand für Nachbearbeitungen der Herstellungsaufwand erheblich reduziert werden kann, z.B. gegenüber Aluminium. In Verbindung mit den dünnen Wandstärken, durch die die Materialkosten in einem vertretbaren Rahmen gehalten werden können, kann die Herstellung so weit vereinfacht werden, dass die Herstellungskosten trotz des an sich viel zu hochwertigen Materials für ein einfaches Gehäuse in einem vermarktbaren Rahmen bleiben.

Der Feinguss wird zweckmäßigerweise nach den Wachsausschmelzverfahren vorgenommen, bei dem ein Wachsmodell mehrfach hintereinander in einen Binder getaucht und mit Keramikpulver bestäubt wir bis eine ausreichend dicke Gussform entsteht. Diese wird anschließend erwärmt zum Ausschmelzen des Wachses und bei weiterer Erhitzung zum Ansintern der Gussform. Mit Hilfe einer Vakuumgießtechnik können feine Strukturen mit Titan gefüllt und Lunker vermieden werden.

Der Landeklappensensor dient zum Erkennen der Stellung der Landeklappen und/oder Vorflügel, wobei im Folgenden auf das gesonderte Hinweisen der Vorflügel zusätzlich zu den Landeklappen teilweise verzichtet wird. Das Befestigungsmittel dient zur Befestigung in einem Flugzeugflügel, wobei diese nicht unmittelbar sondern auch über weitere Elemente erfolgen kann, z.B. über einen zusätzlichen Befestigungsflansch. Das Befestigungsmittel und die Anschlussstelle sind zweckmäßigerweise in das Gehäuse eingearbeitet.

Das Gehäuse ist zumindest mit einer Gehäusewandung aus Titan gefertigt. Vorteilhafterweise ist das gesamte Gehäuse aus Titan gefertigt, so dass ein Sensorelement zweckmäßigerweise rundum von Titan umgeben ist - bis auf notwendige oder sinnvolle Öffnungen im Gehäuse. Weist das Gehäuse einen Befestigungsflansch aus Titan auf, so können feine Strukturen auch am Flansch nach außen getragen werden, so dass eine vorsichtige Behandlung optisch angemahnt wird.

Das Gehäuse ist zweckmäßigerweise zumindest weitgehend frei von einer Span abhebenden Bearbeitung hergestellt. Insbesondere ist zumindest der überwiegende Teil seiner Außenfläche ohne eine solche Bearbeitung versehen und weist insbesondere seine Gusshaut auf. Auch eine Fläche zur Anbringung eines Typenschilds kann bereits im Guss so glatt hergestellt werden, dass eine Nachbearbeitung entfallen kann. Zweckmäßigerweise ist die ganze Außenfläche in dieser Form.

Auch Lagerstellen und Anschlüsse können bereits im Feinguss so fein hergestellt sein, dass eine spanende Bearbeitung entfallen kann. So kann eine Anschlussstelle für einen elektrischen Konnektor bereits fertig gegossen werden, ebenso wie ein Befestigungsmittel zur Befestigung an einem tragenden Element im Flugzeugflügel. Um von außen die Stellung der Welle ablesen zu können, kann das Gehäuse mit einer Ausnehmung versehen sein, das mit einem transparenten Fenster verschlossen ist. Die Gehäuseschnittstelle zu einem solchen Schauglas auf eine Nullpositionsmarke kann unbearbeitet bleiben, so dass gerade empfindliche Randstrukturen in ihrem Gussgefüge intakt und stabil bleiben.

Stellen, die besonders exakt in ihren Maßen gefertigt sein müssen, wie z.B. ein Wellenlagersitz oder eine Getriebeaufnahme, müssen evtl. trotz des genauen Feingussverfahrens nachbearbeitet werden. Durch die hohe Maßgenauigkeit des Feingusses kann allerdings ein Schleifen solcher Schnittstellen ausreichen, so dass auch hier auf eine spanende Bearbeitung verzichtet werden kann und die äußere Gefügestruktur des Gehäuses nur minimal beeinträchtigt wird.

Die Verwendung eines im Titanfeingussverfahren hergestellten Gehäuses der Landeklappensensoreinheit in einem Flugzeugflügel ermöglicht eine hohe Formenvielfalt für das Gehäuse, da trotz des streng vorgegebenen, engen Bauraums im Flügel durch die dünnen Wandungen Freiräume zur Verfügung stehen, die in einer Aluminiumbauweise durch ein dickeres Gehäuse ausgefüllt wären. Daher ermöglicht die Erfindung neue vorteilhafte Formgebungen des Gehäuses, von denen im Folgenden einige Möglichkeiten ausgeführt sind.

In einer vorteilhaften Ausführungsform der Erfindung weist das Gehäuse einen ersten, den Positionssensor umgebenden Gehäuseteil und einen zweiten, ein Getriebe umgebenen Gehäuseteil auf, wobei beide Gehäuseteile mit einem gleichen Befestigungsmittel, z.B. zur Befestigung an einem Befestigungsflansch, ausgeführt sind. Trotz verschiedener Abmessungen des Positionssensors und des Getriebes kann mit gleichen Befestigungsmitteln gearbeitet werden, so dass die Landeklappensensoreinheit mit oder ohne Getriebe an z.B. ein und demselben Flansch befestigt werden kann.

Vorteilhafterweise ist die Anschlussstelle am zweiten Gehäuseteil angeordnet. Dieser das Getriebe beherbergende Gehäuseteil ist in Nachbarschaft zu einer Befestigung am Flügel, z.B. einem Flansch, angeordnet, also dort, wo der erste Gehäuseteil wäre, wenn die Landeklappensensoreinheit ohne Getriebe ist. Auf diese Weise kann ein flugzeugseitiger Konnektor immer an der gleichen Stelle sein, unabhängig davon ob eine Landeklappensensoreinheit mit oder ohne Getriebe verwendet wird.

Eine gegen Aufschlag, z.B. eines Gummihammers, besonders stabile Gehäuseform bzw. Anordnung von Konnektoren am Gehäuse kann erreicht werden, wenn die Anschlussstelle für einen in Radialrichtung zu einer Welle des Positionssensors ausgerichteten elektrischen Konnektor ausgeführt ist.

Einer Beschädigung durch z.B. einen Hammerschlag kann entgegengewirkt werden, wenn die Anschlussstelle über Gehäuseschrägflächen mit einem zylindrischen Gehäuseteil verbunden ist. Durch die hohe Stabilität des Gehäuses kann bei dieser Bauform auf eine rundum zylindrische Gehäusebauform um den Positionssensor oder das Getriebe verzichtet werden.

Weitere Vorteile ergeben sich aus der folgenden Zeichnungsbeschreibung. In der Zeichnung sind Ausführungsbeispiele der Erfindung dargestellt. Die Zeichnung und die Beschreibung enthalten zahlreiche Merkmale in Kombination, die der Fachmann zweckmäßigerweise auch einzeln betrachten und zu sinnvollen weiteren Kombinationen zusammenfassen wird.

Es zeigen:
- Fig. 1: eine Landeklappensensoreinheit von hinten,
- Fig. 2: eine Seitendarstellung der Landeklappensensoreinheit aus Fig. 1,
- Fig. 3: die Landeklappensensoreinheit aus Fig. 1 von vorne und
- Fig. 4: die Landeklappensensoreinheit aus Fig. 1 von oben.

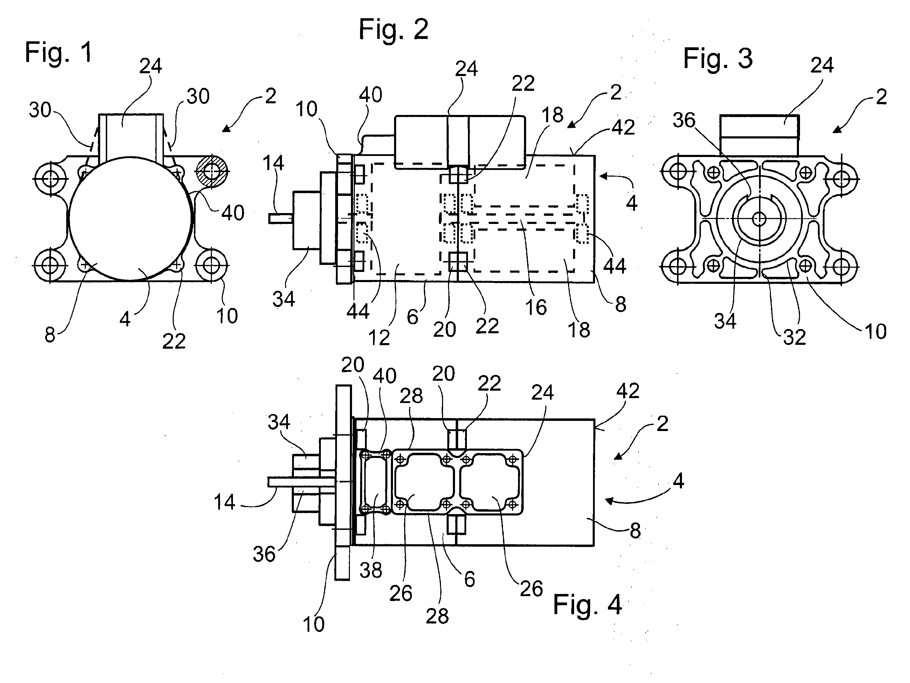

In den Figuren 1 bis 4 ist eine Landeklappensensoreinheit 2 in vier verschiedenen Ansichten dargestellt, nämlich - in der Reihenfolge der Figuren - von hinten, von der Seite, von vorne und von oben. Die Landeklappensensoreinheit 2 ist mit einem Gehäuse 4 als äußere Hülle versehen, das einen vorderen Teil 6 und einen hinteren Teil 8 aufweist. Der vordere Teil 6 ist mit einem Befestigungsflansch 10 zur Befestigung in einem Flugzeugflügel verbunden und beherbergt in seinem Inneren ein Getriebe 12, das in Figur 2 gestrichelt angedeutet ist. Das Getriebe 12 ist dazu vorgesehen, eine schnelle Rotation einer Welle 14, die mit einer Kugelrollspindel im inneren des Flugzeugflügels verbunden ist, in eine langsame Rotation einer Welle 16, die von zwei Positionssensoren 18 im hinteren Teil 8 des Gehäuses 4 abgetastet wird, zu untersetzen. Das Getriebe 12 ist so ausgelegt, dass die hintere Welle 16 bei einer vollen Ausfahrbewegung eines Vorflügels oder einer Landklappe weniger als eine volle Umdrehung dreht, sodass ihre absolute Position zu den Positionssensoren 18 einen eindeutigen Aufschluss über die Stellung des Vorflügels bzw. der Landeklappe liefert.

Sowohl das Gehäuse 4 als auch der Befestigungsflansch 10 sind vollständig aus Titan gefertigt. Die beiden umgebenden Teile 6, 8 des Gehäuses 4 sind hierbei überwiegend mit Wandstärken zwischen 0,5 mm und 0,8 mm ausgeführt, wobei Bereiche um Befestigungsmittel 20, 22 und die Befestigungsmittel 20, 22 selbst etwas dicker ausgeführt sind. Der hintere Teil 8 des Gehäuses 4 umgibt die beiden Positionssensoren 18 topfförmig an fünf Seiten, wobei die seitliche Wandung zylindrisch um die Positionssensoren 18 herumgeführt ist. Zum vorderen Teil 6 ist das hintere Teil 8 offen und beide Teile 6, 8 sind durch ihre Befestigungsmittel 20, 22 durch Verschraubungen fest miteinander verbunden. Der vordere Teil 6 des Gehäuses 4 ist im Wesentlichen rohrförmig ausgeführt und mit seinen vier Befestigungsmitteln 20 durch Verschraubungen fest mit dem Befestigungsflansch 10 verbunden.

Auf der Oberseite des Gehäuses 4 ist eine Anschlussstelle 24 für zwei elektrische Konnektoren der Positionssensoren 18 versehen, die einstückig mit dem vorderen Teil 6 des Gehäuses 4 ausgeführt ist. Die Anschlussstelle ist mit zwei Öffnungen 26 zum Einführen jeweils eines Konnektors bzw. Steckers ausgeführt, deren Gegenstücke im betriebsfertigen Zustand der Landeklappensensoreinheit 2 bereits in den Öffnungen 26 positioniert sind zum Verbinden mit den eingeführten Steckern.

Die Anschlussstelle 24 ist mit zwei parallelen Seitenwänden 28 hergestellt, die beide parallel zur Einführungsrichtung von oben nach unten, also parallel zur Blickrichtung in Figur 4, ausgeführt sind. In einer alternativen Ausführungsform der Anschlussstelle 24 können die Seitenwände 28 schräg zueinander als Gehäuseschrägflächen 30 ausgeführt sein, wie in Figur 1 durch gestrichelte Linien angedeutet ist. Hierdurch kann eine sehr hohe Stabilität einer entsprechenden Anschlussstelle erreicht werden, die auch sehr stabil gegenüber Hammerschlägen ist.

Die Anschlussstelle 24 ist einstückig mit dem vorderen Teil 6 des Gehäuses 4 hergestellt. In einer alternativen Ausführungsform kann eine analoge Anschlussstelle 24 beispielsweise einstückig mit dem hinteren Teil 8 des Gehäuses 4 gefertigt sein, sodass der hintere Teil 8 ohne den vorderen Teil 4 direkt mit dem Befestigungsflansch 10 verbunden werden kann. Dies ist besonders vorteilhaft für eine Landeklappensensoreinheit 2, die ohne ein Getriebe 12 auskommt und deren Welle 16 an den Positionssensoren 18 starr mit der eingehenden Welle 14 verbunden werden kann. Auf diese Weise verbleibt die Anschlussstelle 24 unabhängig von der Ausführungsform der Landeklappensensoreinheit 2 relativ zum Befestigungsflansch 10 und dadurch relativ im Flugzeugflügel an stets der gleichen Position, sodass eine Anpassung einer Befestigung innerhalb des Flugzeugflügels an eine Landeklappensensoreinheit 2 mit oder ohne Getriebe 12 entfallen kann. Durch die gleiche Ausführung der Befestigungsmittel 20, 22 können sowohl die Befestigungsmittel 22 direkt am Befestigungsflansch 10 verbunden werden als auch die Befestigungsmittel 20, wie in Figur 2 dargestellt ist.

Der Befestigungsflansch 10 ist mit einer Gerippestruktur 32 versehen, die ihm eine besondere Festigkeit verleiht und zugleich durch dünne Wandungen in Leichtbauweise ausgeführt ist. In einen oberen Bereich einer Welleneinfassung 34 ist eine Aussparung 36 eingearbeitet zum Sichtbarmachen der Welle 14 von außen. Eine Positionsmarkierung auf der Welle 14 kann hierdurch eingesehen werden, sodass eine Nullpunktposition optisch überprüft werden kann. Hinter dem Befestigungsflansch 10 ist eine weitere Aussparung 38 vorhanden, die von einer kastenförmigen Wandung 40 umgeben ist zum Aufschrauben eines Schauglases, so dass auch am Getriebe 12 eine Nullpunktsmarkierung eingesehen werden kann. In beiden Bereichen der Aussparungen 36, 38 ist die Gusshaut intakt.

Das Gehäuse 4 ist sowohl an seinem vorderen Teil 6 als auch an seinem hinteren Teil an der gesamten Außenfläche 42 frei von einer spanenden Bearbeitung hergestellt. Insbesondere ist an der gesamten Außenfläche 42 die Gusshaut aus dem Feingussverfahren, mit dem das Gehäuse 4 hergestellt worden ist, erhalten. Auch der Bereich außen und innen der Anschlussstelle 24 ist ohne Nachbearbeitung des erkalteten Titans hergestellt. Hierdurch kann - trotz erhöhter Materialkosten gegenüber Aluminium - eine kostengünstige Herstellung des Gehäuses 4 erreicht werden. Im inneren des Gehäuses 4 befinden sich Wellenlagersitze 44, die in Figur 2 gestrichelt angedeutet sind. Auch diese sind im Feingussverfahren bereits so exakt hergestellt, dass sie ohne spanende Nachbearbeitung auskommen und lediglich durch ein Schleifen in ihren exakten Maßen eingestellt sind. Auch eine Getriebeaufnahme und eine Sensoraufnahme, auf deren schematische Darstellung in Figur 2 innerhalb des vorderen Teils 6 bzw. des hinteren Teils 8 des Gehäuses 4 verzichtet wurde, sind frei von einer spanenden Bearbeitung hergestellt, und evtl. lediglich durch ein Schleifen auf ihre genau Bemaßung eingestellt worden. Durch die weitgehend intakte Gusshaut des Gehäuses 4 weist dieses insbesondere Außen eine hohe Kerbschlagfestigkeit auf, sodass trotz einer sehr dünnen Gehäusewandung eine sehr hohe Festigkeit des Gehäuses 4 zustande kommt.

### Bezugszeichenliste

- 2: Landeklappensensoreinheit
- 4: Gehäuse
- 6: Teil
- 8: Teil
- 10: Befestigungsflansch
- 12: Getriebe
- 14: Welle
- 16: Welle
- 18: Positionssensor
- 20: Schnittstelle
- 22: Schnittstelle
- 24: Anschlussstelle
- 26: Öffnung
- 28: Seitenwand
- 30: Gehäuseschrägfläche
- 32: Gerippestruktur
- 34: Welleneinfassung
- 36: Aussparung
- 38: Aussparung
- 40: Wandung
- 42: Außenfläche
- 44: Wellenlagersitz

## Patentansprüche

1. Landeklappensensoreinheit (2) mit einem Positionssensor (18) zum Erfassen einer Drehstellung einer Welle zum Betätigen von Landeklappen und mit einem den Positionssensor (18) umgebenden Gehäuse (4), mit einem Befestigungsmittel (20, 22) zur Befestigung in einem Flugzeugflügel und einer Anschlussstelle (24) für einen elektrischen Konnektor des Positionssensors (18),
**dadurch gekennzeichnet,**
**dass** das Gehäuse (4) zumindest teilweise aus Titan in einem Feingussverfahren gefertigt ist.

2. Landeklappensensoreinheit (2) nach Anspruch 1,
**dadurch gekennzeichnet,**
**dass** das gesamte Gehäuse (4) aus Titan ist.

3. Landeklappensensoreinheit (2) nach Anspruch 1 oder 2,
**dadurch gekennzeichnet,**
**dass** das Gehäuse (4) einen Befestigungsflansch (10) aus Titan aufweist.

4. Landeklappensensoreinheit (2) nach einem der vorhergehenden Ansprüche,
**dadurch gekennzeichnet,**
**dass** das Gehäuse (4) an seiner Außenfläche (40) im Bereich des Titan frei von einer spanenden Bearbeitung gefertigt ist.

5. Landeklappensensoreinheit (2) nach einem der vorhergehenden Ansprüche,
**dadurch gekennzeichnet,**
**dass** in das Gehäuse (4) ein Wellenlagersitz (38) eingearbeitet ist, der frei von einer spanenden Bearbeitung gefertigt ist.

6. Landeklappensensoreinheit (2) nach einem der vorhergehenden Ansprüche,
**dadurch gekennzeichnet,**
**dass** das Gehäuse (4) einen ersten, den Positionssensor (18) umgebenden Gehäuseteil (8) und einen zweiten, ein Getriebe (12) umgebenen Gehäuseteil (6) aufweist und beide Gehäuseteile (6, 8) mit einem gleichen Befestigungsmittel (20, 22) zur Befestigung im Flugzeugflügel ausgeführt sind.

7. Landeklappensensoreinheit (2) nach Anspruch 6,
**dadurch gekennzeichnet,**
**dass** die Anschlussstelle (24) am zweiten Gehäuseteil (6) angeordnet ist.

8. Landeklappensensoreinheit (2) nach einem der vorhergehenden Ansprüche,
**dadurch gekennzeichnet,**
**dass** die Anschlussstelle (24) für einen in Radialrichtung zu einer Welle (16) des Positionssensors (18) ausgerichteten elektrischen Konnektor ausgeführt ist.

9. Landeklappensensoreinheit (2) nach einem der vorhergehenden Ansprüche,
**dadurch gekennzeichnet,**
**dass** die Anschlussstelle (24) über Gehäuseschrägflächen (30) mit einem teilzylinderförmigen Gehäuseteil (8) verbunden ist.
